# EUROPEAN PATENT APPLICATION

(11) **EP 4 852 545 A1**
(43) Date of publication of application: **09.12.2026**
(21) Application number: 24930311.6
(22) Date of filing: 26.07.2024
(51) Int. Cl.: H04W 56/00

(54) **COMMUNICATION METHOD AND SYSTEM, AND RELATED DEVICE**

(30) Priority: 21.03.2024 CN 202410327974
(71) Applicant: Honor Device Co., Ltd., Shenzhen, Guangdong 518040 (CN)
(72) Inventor: ZHANG, Jian, Shenzhen, Guangdong 518040 (CN)
(74) Representative: Isarpatent
(86) International application number: PCT/CN2024/107734
(87) International publication number: WO 2025/194647

(57) **Abstract**

Embodiments of this application provide a communication method and system and a related device. The method includes: A UE receives an RRC reconfiguration message and a first signal from a first network element. The RRC reconfiguration message is used for adding a carrier of a second network element to the UE. The first signal is used by the UE to achieve downlink synchronization with the second network element and measure a channel state corresponding to the first signal. The UE further receives an activation message from the first network element. The activation message is used for activating the carrier of the second network element added to the UE, so that the UE sends a channel state report to the second network element. The channel state report includes a measurement result of the UE for the channel state corresponding to the first signal. In this way, the UE can send the channel state report to the second network element after receiving the activation message. This can effectively improve efficiency of adding the carrier of the second network element to the UE. In addition, the UE achieves downlink synchronization with the second network element based on the first signal sent by the first network element. This enables the second network element to achieve network energy saving without needing to broadcast a signal.

## Description

This application claims priority to Chinese Patent Application No. 202410327974.4, filed with the China National Intellectual Property Administration on March 21, 2024 and entitled "COMMUNICATION METHOD AND SYSTEM AND RELATED DEVICE", which is incorporated herein by reference in its entirety.

### TECHNICAL FIELD

This application relates to the field of communication technologies, and in particular, to a communication method and system and a related device.

### BACKGROUND

In an actual application scenario, a plurality of network elements (such as base stations) often provide communication services for a user equipment (user equipment, UE), and different network elements communicate with the UE at different frequencies. In addition, the plurality of network elements may support carrier aggregation (carrier aggregation, CA), to satisfy a relatively high requirement of the UE for a bandwidth. The plurality of network elements may share a site at a same location, that is, may be co-located (co-located). Alternatively, the plurality of network elements may be deployed at different sites, or the like.

After the UE establishes a radio resource control (radio resource control, RRC) connection with one network element of the plurality of network elements, the network element may serve as a primary cell, to provide corresponding communication services for the UE. In an actual application scenario, for example, when the UE downloads a relatively large amount of video data from a network side, since a communication speed of a carrier of a single network element is limited, the primary cell may add carriers of other network elements (configured as secondary cells) to the UE, to improve data communication efficiency between the UE and the network side.

During specific implementation, after the primary cell configures and activates a carrier of a secondary cell for the UE, the UE needs to receive a signal sent by the secondary cell to achieve downlink synchronization, and after achieving the downlink synchronization, send a measurement report corresponding to a channel state information reference signal (channel state information - reference signal, CSI-RS) sent by the primary cell to the secondary cell, thereby completing a process of adding the carrier of the secondary cell to the UE.

However, a delay of adding the carrier of the secondary cell to the UE in such a manner is relatively high, causing efficiency of adding the carrier of the secondary cell to be reduced, and affecting overall data communication efficiency between the UE and the network side.

### SUMMARY

This application provides a communication method and system and a related device, to improve overall data communication efficiency between a UE and a network side.

To achieve the foregoing objectives, this application provides the following technical solutions.

According to a first aspect, this application provides a communication method. The method is applied to a UE (a user equipment). The UE establishes an RRC (radio resource control) connection with a first network element (a primary cell), and the UE has not established an RRC connection with a second network element (a secondary cell). The UE receives an RRC reconfiguration message from the first network element. The RRC reconfiguration message is used for adding a carrier of the second network element to the UE. The UE further receives a first signal from the first network element. The first signal is used by the UE to achieve downlink synchronization with the second network element, and the first signal is further used for measuring a channel state corresponding to the first signal. Then, the UE receives an activation message from the first network element. The activation message is used for activating the carrier of the second network element added to the UE. In this way, the UE sends a channel state report to the second network element. The channel state report includes a measurement result, of the UE, for the channel state corresponding to the first signal.

Because the UE can receive the first signal during an interval between reception of the RRC reconfiguration message and the activation message, a process in which the channel state corresponding to the first signal is measured and the corresponding channel state report is generated can be performed before the UE receives the activation message, and downlink synchronization with the second network element can be achieved based on the first signal. In this way, the UE can send the channel state report to the second network element after receiving the activation message. Compared with a manner of spending time receiving the first signal, achieving downlink synchronization with the second network element, measuring the channel state corresponding to the first signal, and generating the channel state report by the UE after receiving the activation message, this can effectively improve a process of feeding back the channel state report to the second network element by the UE, that is, can effectively improve efficiency of adding the carrier of the second network element to the UE. In addition, the UE achieves downlink synchronization with the second network element based on the first signal sent by the first network element. In this way, the second network element does not need to broadcast a signal that enables the UE to achieve downlink synchronization with the second network element, so that the second network element can achieve network energy saving without needing to broadcast a signal.

In a possible implementation, the RRC reconfiguration message is further used for configuring a first time-frequency resource associated with the second network element, and the first signal is transmitted to the UE through the first time-frequency resource. In this way, the UE may detect the first signal on the first time-frequency resource indicated by the RRC reconfiguration message, so as to implement downlink synchronization with the second network element and measurement of the channel state based on the detected first signal.

In a possible implementation, the RRC reconfiguration message is further used for configuring a second time-frequency resource associated with a third network element. The second time-frequency resource is used for transmitting a second signal from the first network element to the UE when a carrier of the third network element is added to the UE. The second signal is used by the UE to achieve downlink synchronization with the third network element. The second signal is further used for measuring the channel state corresponding to the second signal. The activation message received by the UE includes indication information of the first signal. In this way, the first network element may send different signals respectively associated with different network elements to the UE when adding carriers of the different network elements to the UE, so that the UE can achieve downlink synchronization with each of the network elements and measurement of the channel state based on a signal respectively associated with each of the network elements.

In a possible implementation, the first signal includes a synchronization signal/physical broadcast channel block SSB, a channel state information reference signal CSI-RS, or a tracking reference signal TRS.

In a possible implementation, the carrier of the first network element configured for the UE and the carrier of the second network element are two carriers within a same band. Alternatively, the carrier of the first network element configured for the UE and the carrier of the second network element are two carriers within different bands. In this way, flexibility of the first network element in configuring carriers for the UE can be improved.

In a possible implementation, the UE may further send an RRC message to the first network element. The RRC message indicates that the UE has a capability of achieving downlink synchronization with the second network element based on the first signal. Alternatively, the RRC message indicates that the UE has a capability of generating the channel state report before receiving the activation message. In this way, because the UE actively reports a capability to the first network element, the first network element can use different strategies for different UEs to add carriers of other network elements to the UE.

According to a second aspect, this application provides a communication method. The method is applied to a first network element. The first network element establishes an RRC (radio resource control) connection with a UE (a user equipment). The UE has not established an RRC connection with a second network element. The method includes: The first network element sends a radio resource control RRC reconfiguration message to the UE, and sends a notification message to the second network element. The RRC reconfiguration message is used for adding a carrier of the second network element to the UE, and the notification message is used for instructing the second network element to add the carrier to the UE. The first network element sends a first signal to the UE. The first signal is used by the UE to achieve downlink synchronization with the second network element. The first signal is further used for measuring the channel state corresponding to the first signal. The first network element sends an activation message to the UE. The activation message is used for activating the carrier of the second network element added to the UE.

In a possible implementation, the RRC reconfiguration message is further used for configuring a first time-frequency resource associated with the second network element. The first network element sending a first signal to the UE includes: The first network element sends the first signal to the UE through the first time-frequency resource.

In a possible implementation, the RRC reconfiguration message is further used for configuring a second time-frequency resource associated with a third network element. The second time-frequency resource is used for transmitting a second signal from the first network element to the UE when a carrier of the third network element is added to the UE. The second signal is used by the UE to achieve downlink synchronization with the third network element. The second signal is further used for measuring the channel state corresponding to the second signal. The activation message includes indication information of the first signal.

In a possible implementation, the first signal includes a synchronization signal/physical broadcast channel block SSB, a channel state information reference signal CSI-RS, or a tracking reference signal TRS.

In a possible implementation, the carrier of the first network element configured for the UE and the carrier of the second network element are two carriers within a same band. Alternatively, the carrier of the first network element configured for the UE and the carrier of the second network element are two carriers within different bands.

In a possible implementation, the first network element may further receive an RRC message from the UE. The RRC message indicates that the UE has a capability of achieving downlink synchronization with the second network element based on the first signal. Alternatively, the RRC message indicates that the UE has a capability of generating the channel state report before receiving the activation message.

Because the communication method provided in the second aspect corresponds to the communication method provided in the first aspect, for the technical effects of any one of the implementations in the second aspect, refer to the related descriptions of the technical effects of the corresponding implementation in the foregoing first aspect. Details are not described herein.

According to a third aspect, this application provides a communication method. The method is applied to a second network element. The second network element has not established a radio resource control RRC connection with a user equipment UE, and the UE establishes an RRC connection with a first network element. The method includes: The second network element receives a notification message from the first network element. The notification message is used for instructing the second network element to add a carrier of the second network element to the UE. The second network element receives a channel state report from the UE. The channel state report includes a measurement result, of the UE, for a channel state corresponding to a first signal. The first signal comes from the first network element. The first signal is used by the UE to achieve downlink synchronization with the second network element. The first signal is further used for measuring the channel state corresponding to the first signal.

In a possible implementation, the carrier of the first network element configured for the UE and the carrier of the second network element are two carriers within a same band. Alternatively, the carrier of the first network element configured for the UE and the carrier of the second network element are two carriers within different bands.

Because the communication method provided in the third aspect corresponds to the communication method provided in the first aspect, for the technical effects of any one of the implementations in the third aspect, refer to the related descriptions of the technical effects of the corresponding implementation in the foregoing first aspect. Details are not described herein.

According to a fourth aspect, this application provides a network element. The network element includes a transceiver and a processor. The transceiver is configured to perform a receiving operation and a sending operation in the method according to the foregoing second aspect or any one of the implementations of the second aspect, or perform a receiving operation and a sending operation in the method according to the foregoing third aspect or any one of the implementations of the third aspect. The processor is configured to perform another operation other than the receiving operation and the sending operation in the method according to the foregoing second aspect or any one of the implementations of the second aspect, or perform another operation other than the receiving operation and the sending operation in the method according to the foregoing third aspect or any one of the implementations of the third aspect.

According to a fifth aspect, this application provides a UE (a user equipment). The UE includes a transceiver and a processor. The transceiver is configured to perform a receiving operation and a sending operation in the method according to the foregoing first aspect or any one of the implementations of the first aspect. The processor is configured to perform another operation other than the receiving operation and the sending operation in the method according to the foregoing first aspect or any one of the implementations of the first aspect.

According to a sixth aspect, this application provides a communication system. The communication system includes a UE (a user equipment) and a network element. The UE is configured to perform the method according to the foregoing first aspect or any one of the implementations of the first aspect. The network element is configured to perform the method according to the foregoing second aspect or any one of the implementations of the second aspect, or perform the method according to the foregoing third aspect or any one of the implementations of the third aspect.

According to a seventh aspect, this application provides a computer storage medium, configured to store a computer program. The computer program, when executed, is configured to implement the communication method provided in any one of the first aspect to the third aspect of this application.

According to an eighth aspect, this application provides a computer program product including instructions. The computer program product, when run on at least one computing device, causes the at least one computing device to implement the communication method provided in any one of the first aspect to the third aspect of this application.

### BRIEF DESCRIPTION OF DRAWINGS

FIG. 1 is a structural diagram of an example communication system according to an embodiment of this application;
FIG. 2 is a schematic flowchart of a communication method according to an embodiment of this application;
FIG. 3 is a schematic structural diagram of a network element according to an embodiment of this application; and
FIG. 4 is a schematic structural diagram of a UE according to an embodiment of this application.

### DESCRIPTION OF EMBODIMENTS

Technical solutions in embodiments of this application are clearly and completely described below with reference to the accompanying drawings in embodiments of this application. Terms used in the following embodiments are only intended to describe specific embodiments, and are not intended to limit this application. As used in this specification and the claims of this application, a singular expression form, "one", "a", "the", "foregoing", "said", or "this", is intended to include expression forms such as "one or more", unless clearly indicated to the contrary in the context. It should also be understood that, in embodiments of this application, "one or more" means one, two, or more than two, and "and/or" describes an association relationship between associated objects, indicating that three relationships may exist. For example, "A and/or B" may represent the following cases: only A exists, both A and B exist, and only B exists, where A and B may be singular or plural. The character "/" generally indicates an "or" relationship between associated objects.

Reference to "one embodiment", "some embodiments", or the like described in this specification means that a specific feature, structure, or characteristic described in combination with the embodiment is included in one or more embodiments of this application. Therefore, phrases "in an embodiment", "in some embodiments", "in some other embodiments", "in some additional embodiments", and the like appearing in different parts of this specification do not necessarily refer to the same embodiment, but mean "one or more but not all embodiments", unless otherwise specially emphasized in another manner. Terms "comprise", "include", "have", and variations thereof all mean "including but not limited to", unless otherwise specially emphasized in another manner.

"A plurality of" involved in embodiments of this application means being greater than or equal to two. It should be noted that, in the description of embodiments of this application, terms such as "first" and "second" are merely used for distinguishing, and cannot be understood as an indication or implication of relative importance, or an indication or implication of a sequence.

Embodiments of this application are applied to a communication system, which may be a fifth generation (5G) communication system, or may be an LTE and 5G hybrid architecture, or a 5G new radio (5G New Radio, 5G NR) system, or a new communication system in future communication development, and the like.

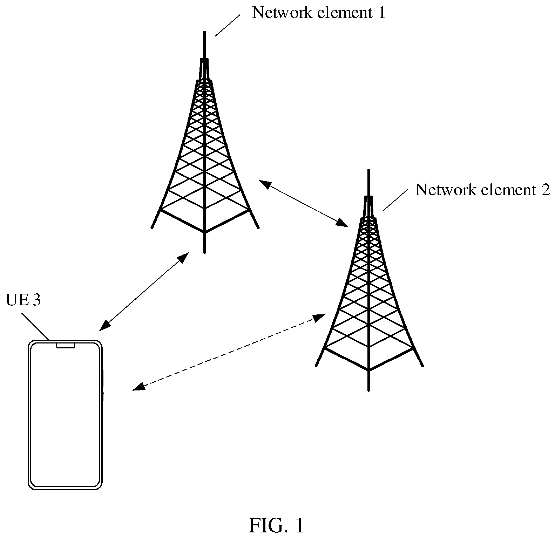

An example of the communication system is shown in FIG. 1. The communication system includes a network element 1, a network element 2, and a UE3.

In embodiments provided in this application, the network element 1 may be any device that is located at a network side and has a wireless transceiver function, including but not limited to: a base station (gNodeB or gNB) or a transmission receiving point/transmission reception point (transmission receiving point/transmission reception point, TRP) in new radio (new radio, NR), or the like. The network element 1 may be a macro base station, a micro base station, a Picocell, a small cell, a relay station, a partial sector antenna on a base station, a balloon station, or the like. The network element 1 may include one or more co-sited or non-co-sited transmission reception points (Transmission Reception Point, TRP). The network element 1 may alternatively be a radio controller, a centralized unit (centralized unit, CU), and/or a distributed unit (distributed unit, DU) in a cloud radio access network (cloud radio access network, CRAN) scenario. The network element 1 may communicate with a terminal device, and may also communicate with the terminal device through a relay station. The network element 2 is similar to the network element 1.

A base station may be configured with a plurality of cells (cells), where each of the cells may be a same carrier (Component Carrier, CC) or different carriers. In this application, the term "cell" and the term "carrier" are interchangeable. The carrier may be understood as a segment of frequency within a band/frequency range (Band). For example, in NR, a frequency range of a band numbered 78, that is, Band n78, is 3300 MHz to 3800 MHz. Therefore, the band has a bandwidth of 500 MHz. If one CC occupies a bandwidth of 100 MHz, five CCs may be formed based on Band n78. In addition, the base station may be configured with three sectors, and each of the sectors corresponds to a cell. In a carrier aggregation (CA) scenario, the carrier aggregation may be intra-band (intra band) carrier aggregation, or inter-band (inter band) carrier aggregation. Aggregation of two carriers is used as an example. For the intra-band carrier aggregation, aggregated carriers may be two carriers within a same band, for example, two CCs within Band n78 that occupy a bandwidth of 100 MHz. For the inter-band carrier aggregation, aggregated carriers may be two carriers within different bands, for example, one CC within Band n78 that occupies a bandwidth of 100 MHz and the other CC within Band n41 that occupies a bandwidth of 100 MHz. The aggregated carriers may come from a same base station. In this case, it may be considered that the carriers are co-located (co-located). The aggregated carriers may also come from different base stations. In this case, the carriers may be co-located, or may be non-co-located. The network element 1 and the network element 2 are configured to implement different cells. In this case, the network element 1 and the network element 2 may be different base stations, and are configured to implement different cells. Alternatively, the network element 1 and the network element 2 may be located on a same base station, for example, may be different sector antennas on the same base station, and configured to implement different cells. The network element 1 and the network element 2 can support CA (carrier aggregation), to satisfy a requirement of the UE3 for a relatively high bandwidth. For example, when the UE3 simultaneously accesses the network element 1 and the network element 2, the network element 1 may implement a primary cell (primary cell, PCell), for example, responsible for transmission of signaling and user data (user data) between the UE3 and a network side, and the network element 2 may implement a secondary cell (secondary cell, SCell), for example, responsible for transmission of user data between the UE3 and the network side.

The UE3 may communicate with a plurality of network elements of different technologies. For example, the UE3 may communicate with a network element supporting an LTE network, or may communicate with a network element supporting a 5G network, and may further perform dual connectivity with the network element supporting the LTE network and the network element supporting the 5G network.

In embodiments provided in this application, the UE3 may be in various forms, for example, a mobile phone (mobile phone), a tablet computer (Pad), a computer with wireless receiving and sending functions, a virtual reality (virtual reality, VR) terminal device, an augmented reality (augmented reality, AR) terminal device, a wireless terminal in industrial control (industrial control), an on-board terminal device, a wireless terminal in self driving (self driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), and a wearable terminal device. The UE may also be referred to as a terminal device, an access terminal device, an on-board terminal, an industrial control terminal, a UE unit, a UE station, a mobile station, a mobile console, a remote station, a remote terminal device, a mobile device, a UE terminal device, a terminal device, a wireless communication device, a UE agent, a UE apparatus, or the like. The terminal may also be a fixed terminal or a mobile terminal.

The foregoing description is provided by using an example in which the communication system includes the network element 1, the network element 2, and the UE3. In another possible implementation, the communication system may include a plurality of UEs or a larger quantity of network elements. Alternatively, in another possible implementation, the network element 1 in the communication system may be replaced by a network element in another form. No limitation is imposed herein. For ease of understanding, a description is provided below by using an example in which the UE3 and the network element 1 interact with each other.

Under normal circumstances, the network element 1 may add a carrier of the network element 2 to the UE3 after the UE3 establishes an RRC connection with the network element 1 in the communication system. In this case, the carrier of the network element 1 may serve as a primary carrier, and the carrier of the network element 2 may serve as a secondary carrier, so that data communication with the UE3 is performed by using carriers of a plurality of network elements, thereby effectively improving data communication efficiency between the UE3 and the network side. However, during a process of adding the carrier of the network element 2 to the UE3, if the UE3 first waits until the network element 1 delivers an activation message indicating to activate the carrier of the network element 2 added to the UE3, and then the UE3 achieves downlink synchronization based on a signal broadcast by the network element 2 (such as an SSB), and then performs channel state measurement on the signal, and finally reports a measurement result of the channel state to the network element 2, this causes a relatively long time consumption for adding the carrier of the network element 2 to the UE3, thereby causing relatively low efficiency of adding the carrier of the network element 2, and further affecting overall data communication efficiency between the UE3 and the network side.

Therefore, embodiments of this application provide a communication method. During an interval between reception of an RRC reconfiguration message and an activation message by the UE3, the network element 1 sends a first signal used for performing downlink synchronization with the network element 2 and used for measuring a channel state to the UE3. In this way, a process in which the channel state corresponding to the first signal is measured and a corresponding channel state report is generated can be performed before the UE3 receives the activation message, and downlink synchronization with the second network element can be achieved based on the first signal. Therefore, the UE3 can send the channel state report to the network element 2 after receiving the activation message, thereby achieving improving efficiency of adding the carrier of the second network element to the UE. In the meantime, the network element 2 may not need to broadcast a signal used by the UE3 to achieve downlink synchronization with the network element 2. In this way, the network element 2 may achieve network energy saving (network energy saving, NES).

The following describes various communication methods provided in this application for achieving network energy saving with reference to the accompanying drawings. For ease of understanding, the various communication methods described below with reference to the accompanying drawings are described by using an example in which the methods are applied to the communication system shown in FIG. 1. During actual application, a communication process between a network element and a UE in the communication system may also be applied to another communication system supporting CA. No limitation is imposed herein.

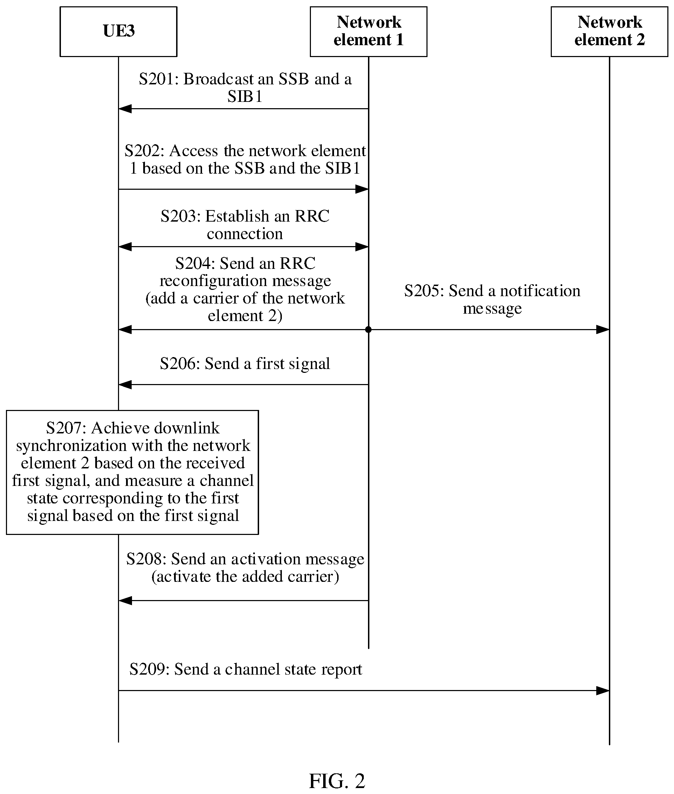

Refer to FIG. 2. A communication method according to an embodiment of this application is shown. As shown in FIG. 2, a process of the communication method includes the following steps.

S201: A network element 1 broadcasts an SSB and a SIB1.

In this embodiment, the network element 1 may periodically send the SSB and a system information block 1 (system information block1, SIB1), so that a UE3 within signal coverage of the network element 1 can perform downlink synchronization with the network element 1 in time domain and frequency domain and access the network element 1 based on the received SSB and SIB1. In this case, a network element 2 may not broadcast the SSB or another signal used for achieving downlink synchronization with the network element 2, so as to reduce energy consumption of the network element 2 and achieve network energy saving.

For example, a period during which the network element 1 broadcasts the SSB and the SIB1 may be, for example, 20 milliseconds (ms), or may be 40 ms. No limitation is imposed herein. In addition, the network element 1 may separately broadcast the SSB and the SIB1 on one or more beams. For example, the network element 1 may separately send the SSB and the SIB1 on eight beams. When the network element 1 sends the SSB and the SIB1 on different beams, the SSB and the SIB1 may be separately sent on different time-domain resources. Alternatively, the network element 1 may send the SSB and the SIB1 without distinguishing between beams.

S202: A UE3 accesses the network element 1 based on the received SSB and SIB1.

During actual application, the UE3 may be within signal coverage of the network element 1. Therefore, after receiving the SSB and the SIB1 broadcast by the network element 1, the UE3 may achieve downlink synchronization with the network element 1 based on the SSB, and access the network element 1 based on an MIB in the SSB and the SIB1.

Specifically, the UE3 may attempt to detect the SSB and decode a PSS and an SSS. Once the UE3 successfully detects a primary synchronization signal (primary synchronization signal, PSS) and a secondary synchronization signal (secondary synchronization signal, SSS) in the SSB, the UE3 attempts to decode a physical broadcast channel (physical broadcast channel, PBCH) in the SSB. In addition, the UE3 may continue decoding to obtain a master information block (master information block, MIB) after successfully detecting the PBCH. Then, the UE3 finds a position of CORESET0 (that is, a CORESET for a PDCCH or DCI used for SIB1 transmission) and SearchSpace information based on pdcch-ConfigSIB1 information in the MIB. The UE3 blindly decodes downlink control information (downlink control information, DCI) 1_0 in SearchSpace. The UE3 detects and decodes, based on the DCI 1_0, a physical downlink shared channel (physical downlink shared channel, PDSCH) carrying the SIB1, and then decodes the SIB1. If the SIB1 carries information about another SIB, the UE3 may further decode the another SIB (such as an SIB2). Through the foregoing process, the UE3 can achieve time and frequency synchronization with the network element 1, detect an ID of the network element 1, and access the network element 1 based on the information obtained through decoding.

S203: The UE3 establishes a radio resource control (radio resource control, RRC) connection with the network element 1.

For example, after accessing the network element 1, the UE3 may establish an RRC connection with the network element 1, so that the UE3 can communicate with the network element 1 based on the RRC connection, such as downloading video data from the network element 1. A specific implementation process in which the UE3 establishes the RRC connection with the network element 1 has relevant applications in actual application scenarios. Details are not described herein.

In this embodiment, a description is provided by using an example in which the UE3 establishes the RRC connection with the network element 1. In another embodiment, the UE3 and the network element 1 may also establish a connection in another manner. No limitation is imposed herein.

S204: The network element 1 sends an RRC reconfiguration message to the UE3 based on the established RRC connection, where the RRC reconfiguration message is used for adding a carrier of the network element 2 to the UE3.

S205: The network element 1 sends a notification message to the network element 2, where the notification message is used for instructing the network element 2 to add the carrier of the network element 2 to the UE3.

Under normal circumstances, after establishing the RRC connection with the network element 1, the UE3 may perform data communication with a network side by using the carrier provided by the network element 1. However, in an actual application scenario, a data communication requirement between the UE3 and the network side usually dynamically changes. For example, an amount of data that the network side needs to send to the network element 1 may be relatively large (for example, an amount of to-be-transmitted data is greater than a threshold). In this case, the network element 1 may dynamically add the carrier of the network element 2 to the UE3. In this way, the network side simultaneously uses a carrier of the network element 1 and the carrier of the network element 2 to send data to the UE3, to improve efficiency of data transmission. In this case, the carrier of the network element 1 may serve as a primary carrier, for example, responsible for transmission of signaling and part of user data (user data) between the network side and the UE3, and the carrier of the network element 2 may serve as a secondary carrier, for example, responsible for transmission of another part of the user data between the network side and the UE3.

During specific implementation, the network element 1 may send the RRC reconfiguration message to the UE3. A configuration field in the RRC reconfiguration message indicates to add the carrier of the network element 2 to the UE3. In this case, the carrier of the network element 2 configured by the network element 1 for the UE3 is in a non-activated state. In other words, the UE3 cannot perform data communication with the network side by using the non-activated carrier. Therefore, under normal circumstances, the network element 1 subsequently sends, to the UE3, an activation message indicating to activate the carrier.

The carrier of the network element 1 and the carrier of the network element 2 added to the UE3 may be two carriers within a same band. For example, both the carriers are two carriers with a bandwidth of 100 MHz within Band n78. Alternatively, the carrier of the network element 1 and the carrier of the network element 2 added to the UE3 may be carriers within different bands. For example, the carrier of the network element 1 may be a carrier with 100 MHz within Band n78, and the carrier of the network element 2 may be a carrier with a bandwidth of 100 MHz within Band n41. No limitation is imposed herein. In addition, after the carrier of the network element 2 is added to the UE3, carrier aggregation can be performed on the carrier of the network element 1 and the carrier of the network element 2, to provide higher data communication efficiency for the UE3.

In the meantime, the network element 1 also notifies the network element 2 of information about adding the carrier to the UE3.

As an implementation example, the network element 1 may send the notification message to the network element 2 through an Xn interface (such as an X2 interface). For example, the notification message may include an identifier of the UE3, or configuration information of the carrier of the network element 2 to be added, so as to instruct, based on the notification message, to add the carrier of the network element 2 to the UE3 as a secondary carrier.

It should be noted that after receiving the RRC reconfiguration message sent by the network element 1, the UE3 needs to spend a period of time completing configuration update. In other words, the UE3 needs a period of time to respond to the configuration update for the UE3. Therefore, under normal circumstances, after sending the RRC reconfiguration message, the network element 1 sends the activation message to the UE3 after a period of time, so as to activate the updated carrier after the UE3 completes carrier configuration update. Therefore, in this embodiment, the network element 1 may first perform step S205 before sending the activation message to the UE3.

S206: The network element 1 sends a first signal to the UE3.

S207: The UE3 achieves downlink synchronization with the network element 2 based on the received first signal, and the UE3 further measures a channel state corresponding to the first signal based on the first signal, to obtain a channel state report.

In some implementation examples, the first signal sent by the network element 1 may be specifically an SSB or a tracking reference signal (tracking reference signal, TRS). The TRS may be a channel state information reference signal (channel state information reference signal, CSI-RS). Alternatively, the first signal may also be another type of signal. No limitation is imposed herein.

After receiving the first signal sent by the network element 1, the UE3 can achieve downlink synchronization with the network element 2 based on the first signal (the network element 2 does not need to broadcast a signal used for downlink synchronization). Implementations thereof are described by way of example below.
1. When the network element 1 and the network element 2 are co-located, a frame header of the carrier of the network element 1 is aligned with a frame header of the carrier of the network element 2.

When the first signal sent by the network element 1 is specifically an SSB, the UE3 may calculate, based on a carrier frequency of the network element 1 and a carrier frequency between the network element 2 that are carried in the SIB1 broadcast by the network element 1 in step S201, a frequency difference between the carrier frequencies of the two network elements, and achieve downlink synchronization with the network element 2 based on the frequency difference and the SSB broadcast by the network element 1 in step S205.

When the first signal sent by the network element 1 is specifically a TRS, the network element 1 may send the TRS to the UE3 based on the RRC connection. The UE3 may calculate, based on a carrier frequency of the network element 1 and a carrier frequency between the network element 2 that are carried in the SIB1 broadcast by the network element 1 in step S201, a frequency difference between the carrier frequencies of the two network elements, and achieve downlink synchronization with the network element 2 based on the frequency difference and the TRS.

In a first implementation, before sending the TRS to the UE3, the network element 1 may configure, in the RRC reconfiguration message sent to the UE3, a first time-frequency resource used by the network element 1 to send the TRS. For example, the RRC reconfiguration message may include indication information of the first time-frequency resource. The first time-frequency resource includes a time-domain resource and a frequency-domain resource. The time-domain resource may be, for example, a slot and an orthogonal frequency division multiplexing (orthogonal frequency division multiplexing, OFDM) symbol that can be occupied by the UE3 in time domain. The frequency-domain resource may be, for example, one or more REs that can be occupied by the UE3 in frequency domain. In addition, in the RRC reconfiguration message, the first time-frequency resource may be further associated with the network element 2. In this way, after receiving the RRC reconfiguration message, the UE3 may detect whether a TRS exists on the first time-frequency resource indicated by the RRC reconfiguration message. In addition, when the TRS is detected on the first time-frequency resource, the UE3 may achieve downlink synchronization with the network element 2 based on the TRS and the frequency difference between the carrier frequencies of the two network elements.

During actual application, a communication system may further include a larger quantity of network elements, for example, include a network element 4. In a further possible implementation, the RRC reconfiguration message sent by the network element 1 to the UE3 may include indication information of the first time-frequency resource used by the network element 1 to send the first signal (TRS), and indication information of a second time-frequency resource used by the network element 1 to send a second signal (such as the TRS). When the network element 1 adds a carrier of the network element 4 to the UE3, the network element 1 may send the second signal to the UE3 by using the second time-frequency resource based on the RRC connection, so that the UE3 achieves downlink synchronization with the network element 4 by using the second signal and a frequency difference between carrier frequencies of the network element 1 and the network element 4.

In a second implementation, in a process in which the UE3 establishes the RRC connection with the network element 1, the network element 1 may send an RRC configuration message to the UE3. The RRC configuration message may include the first time-frequency resource used by the network element 1 to send the TRS. The first time-frequency resource is configured to be associated with the network element 2 through the RRC configuration message. In this way, after the network element 1 sends the RRC reconfiguration message to the UE3 to add the carrier of the network element 2 to the UE3, the UE3 may detect whether the TRS (that is, the first signal) exists on the first time-frequency resource indicated by the RRC configuration message. In addition, when the TRS is detected on the first time-frequency resource, the UE3 may implement downlink synchronization with the network element 2 based on the TRS and the frequency difference between the carrier frequencies of the two network elements.

Further, when the communication system includes a larger quantity of network elements, the RRC reconfiguration message sent by the network element 1 to the UE3 may include the first time-frequency resource used by the network element 1 to send the first signal (the TRS), and the second time-frequency resource used by the network element 1 to send a second signal (such as the TRS). The first time-frequency resource is associated with the network element 2, and the second time-frequency resource is associated with the network element 4. Correspondingly, the UE3 may determine, based on a network element to which the carrier indicated to add by the RRC reconfiguration message belongs, to detect, on the first time-frequency resource or the second time-frequency resource associated with the network element, a signal used for achieving downlink synchronization with the network element.

2. When the network element 1 and the network element 2 are not co-located, a frame header of the carrier of the network element 1 is aligned with a frame header of the carrier of the network element 2.

When the first signal sent by the network element 1 is specifically an SSB, the UE3 may calculate, based on the carrier frequency of the network element 1 and the carrier frequency of the network element 2 that are carried in the SIB1 broadcast by the network element 1 in step S201, the frequency difference between the carrier frequencies of the two network elements, and calculate, based on a position of the network element 1 and a position of the network element 2 that are carried in the SIB1, a position difference between the two network elements. In this way, the UE3 can achieve downlink synchronization with the network element 2 based on the frequency difference, the position difference, and the SSB broadcast by the network element 1 in step S205.

When the first signal sent by the network element 1 is specifically a TRS, the network element 1 may send the TRS to the UE3 based on the RRC connection. The UE3 may calculate, based on the carrier frequency of the network element 1 and the carrier frequency of the network element 2 that are carried in the SIB1 broadcast by the network element 1 in step S201, the frequency difference between the carrier frequencies of the two network elements, and calculate, based on the position of the network element 1 and the position of the network element 2 that are carried in the SIB1, the position difference between the two network elements. In this way, the UE3 can achieve downlink synchronization with the network element 2 based on the frequency difference, the position difference, and the TRS.

In this case, the network element 1 may send the first signal to the UE3 by using the first time-frequency resource. The first time-frequency resource may be configured in the RRC reconfiguration message sent by the network element 1 to the UE3, or may be configured in the RRC configuration message sent by the network element 1 to the UE3 during establishment of the RRC connection with the UE3. Further, the second time-frequency resource used by the network element 1 to send the second signal to the UE3 when adding the carrier of the network element 4 to the UE3 may be further configured in the RRC reconfiguration message or the RRC configuration message. For a specific implementation in which the network element 1 configures the first time-frequency resource and the second time-frequency resource, refer to the foregoing related descriptions. Details are not described herein.

In addition to the foregoing implementations in which the UE3 achieves downlink synchronization with the network element 2 based on the first signal, during actual application, the UE3 may also achieve downlink synchronization with the network element 2 in another manner. No limitation is imposed herein.

In addition, after receiving the first signal sent by the network element 1, the UE3 can further measure a channel state corresponding to the first signal based on the first signal.

During specific implementation, the UE3 may perform channel measurement on the received first signal, for example, measure a gain, an interference level, or channel quality of a channel transmitting the first signal, to obtain a corresponding measurement result. The measurement result can indicate a state of the channel corresponding to the first signal, so that the UE3 can generate a channel state report based on the measurement result.

In this way, before the network element 1 sends the activation message, the UE3 may complete, based on the first signal sent by the network element 1, a process of downlink synchronization with the network element 2, and a process of generating the channel state report.

S208: The network element 1 sends an activation message to the UE3, where the activation message is used for activating the carrier of the network element 2 added to the UE3.

For example, the activation message sent by the network element 1 may be, for example, a medium access control-control element (medium access control-control element, MAC-CE) message, or may be another type of message. No limitations are imposed herein.

The UE3 can perform, only when receiving the activation message, data communication with the network element 2 by using the activated carrier of the network element 2.

In a possible implementation, when the RRC configuration message or the RRC reconfiguration message sent by the network element 1 to the UE3 includes the indication information of the first time-frequency resource and the second time-frequency resource (and a time-frequency resource associated with another network element), the UE3 may perform signal detection on the first time-frequency resource and the second time-frequency resource and generate a corresponding channel state report for a detected signal. The activation message sent by the network element 1 to the UE3 may include an identifier of the first signal. In this way, the UE3 may determine, based on the identifier of the first signal in the activation message, to send the generated channel state report corresponding to the first signal to the network element 2.

S209: The UE3 sends the channel state report corresponding to the first signal to the network element 2, where the channel state report includes the measurement result of the UE3 for the channel state corresponding to the first signal.

It may be understood that before receiving the activation message, the UE3 has achieved downlink synchronization with the network element 2 and generated the corresponding channel state report based on the first signal sent by the network element 1. Therefore, after receiving the activation message, the UE3 may directly send the generated channel state report to the network element 2, so that the network side can perceive a channel state between the UE3 and the network side. Under normal circumstances, in a scenario of carrier aggregation, the channel state measured by the UE3 based on the first signal sent by the network element 1 is similar to a state of a channel used when the UE3 and the network element 2 perform data communication. Therefore, the network side may perceive, based on the channel state report reported by the UE3, the state of the channel used when the UE3 and the network element 2 perform data communication.

Because the UE3 can receive the first signal in an interval between reception of the RRC reconfiguration message and the activation message, a process of measuring the channel state corresponding to the first signal and generating a corresponding channel state report can be performed before the UE3 receives the activation message, and downlink synchronization with the second network element can be achieved based on the first signal. In this way, the UE3 can send the channel state report to the network element 2 after receiving the activation message. Compared with a manner of spending time receiving the first signal, achieving downlink synchronization with the network element 2, measuring the channel state corresponding to the first signal, and generating the channel state report by the UE3 after receiving the activation message, this can effectively improve a process of feeding back the channel state report to the network element 2 by the UE3, that is, can effectively improve efficiency of adding the carrier of the network element 2 to the UE3.

In addition, the UE3 achieves downlink synchronization with the network element 2 based on the first signal sent by the network element 1. In this way, the network element 2 does not need to broadcast a signal that enables the UE3 to achieve downlink synchronization with the network element 2, so that the network element 2 can achieve network energy saving without needing to broadcast a signal.

It should be noted that in the foregoing embodiment shown in FIG. 2, a description is provided by using an example in which the network element 1 adds the carrier of the network element 2 to the UE3. In another embodiment, when the communication system further includes another network element, for example, includes a network element 4, the network element 1 may also add a carrier of the network element 4 to the UE3. In this case, after sending the RRC reconfiguration message, the network element 1 may send a second signal corresponding to the network element 4 to the UE3, and the UE3 may achieve downlink synchronization with the network element 4 based on the second signal, and measure a channel state corresponding to the second signal and generate a channel state report. In this way, after receiving the activation message, the UE3 sends the generated channel state report to the network element 4, to achieve rapid activation of the carrier of the network element 4 added to the UE3. For a specific implementation, refer to the related descriptions in the foregoing embodiments. Details are not described herein.

In an actual application scenario, a plurality of different UEs may establish an RRC connection with the network element 1. However, the plurality of different UEs may have different capabilities. For example, some UEs may support achieving downlink synchronization with the network element 2 based on the first signal sent by the network element 1, and support accelerating addition of the carrier of the network element 2 based on the method process shown in FIG. 2, and some other UEs may not support achieving downlink synchronization with the network element 2 based on the first signal sent by the network element 1, or not support accelerating addition of the carrier of the network element 2 based on the method process shown in FIG. 2.

Based on this, in a further possible implementation, after the UE3 establishes the RRC connection with the network element 1 and before the network element 1 sends the RRC reconfiguration message to the UE3, the UE3 may further report a capability of the UE3 to the network element 1, so that the network element 1 can use different strategies for different UEs to add a carrier of another network element to the UE.

During specific implementation, before the network element 1 sends the RRC reconfiguration message to the UE3, the UE3 may send an RRC message to the network element 1. The RRC message indicates the capability of the UE3. For example, the RRC message may include an information element (information element, IE), for example, may include an information element named "UE capability information elements", so that the UE3 can indicate the capability of the UE3 by using the information element.

The capability of the UE3 may include a capability of achieving downlink synchronization with the network element 2 based on a signal (such as the foregoing first signal) sent by the network element 1, and may further include a capability of generating a channel state report based on the signal sent by the network element 1 before receiving the activation message sent by the network element 1 (to improve efficiency of adding a secondary carrier to the UE3 by the network side).

Another UE that establishes an RRC connection with the network element 1 in the communication system may not have the capability of achieving downlink synchronization with the network element 2 based on the signal sent by the network element 1, or may not have the capability of generating a channel state report based on the signal sent by the network element 1 before receiving the activation message sent by the network element 1, or has neither of the two capabilities, or the like.

During actual application, in addition to the foregoing capabilities, UE capabilities reported by the UE3 and another UE may be further other types of capability information. No limitation is imposed herein.

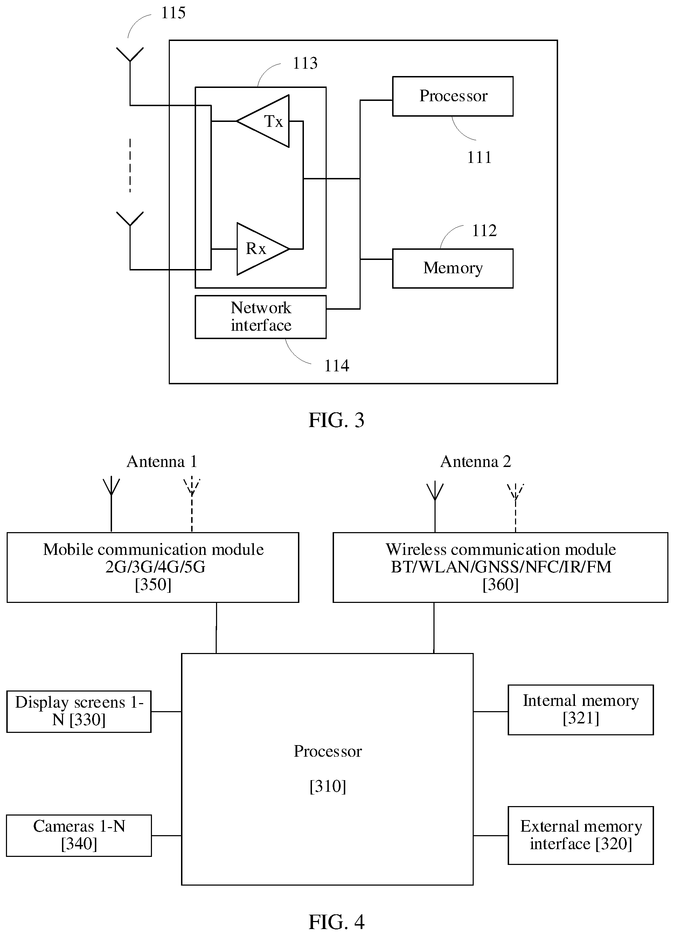

A hardware implementation of a network element and a UE is further described below with reference to FIG. 3 and FIG. 4.

Refer to FIG. 3. A schematic diagram of a hardware structure of a network element is shown. The network element shown in FIG. 3 includes at least one processor 111, at least one memory 112, at least one transceiver 113, at least one network interface 114, and one or more antennas 115. The processor 111, the memory 112, the transceiver 113, and the network interface 114 are connected, for example, through a bus. In embodiments of this application, the connection may include various types of interfaces, transmission lines, buses, or the like. This is not limited in embodiments. The antenna 115 is connected to the transceiver 113. The network interface 114 is configured to enable the network element to be connected to another communication device through a communication link. For example, the network interface 114 may include a network interface between the network element and a network element in a core network, for example, an S1 interface. The network interface may include a network interface between the network element and another network element, for example, an X2 or Xn interface.

The processor 111 shown in FIG. 3 may specifically complete an action processed by the network element in the foregoing method. The memory 112 may complete a storage action in the foregoing method. The transceiver 113 and the antenna 115 may perform receiving and sending actions on an air interface in the foregoing method. The network interface 114 may complete an action of interaction with the network element or another network element in the foregoing method.

The processor in embodiments of this application, for example, the processor 111, may include but is not limited to at least one of the following: a central processing unit (central processing unit, CPU), a microprocessor, a digital signal processor (DSP), a microcontroller unit (microcontroller unit, MCU), or various types of computing devices running software such as an artificial intelligence processor. Each type of computing device may include one or more cores for executing software instructions to perform an operation or processing. The processor may be a separate semiconductor chip, or may be integrated with another circuit into one semiconductor chip. For example, the processor may form an SoC (system on chip) together with another circuit (for example, a codec circuit, a hardware acceleration circuit, or various bus and interface circuits), or may also be integrated into an ASIC as a built-in processor of the ASIC, where the ASIC integrated with the processor may be packaged separately, or may also be packaged together with another circuit. In addition to including a core for executing software instructions to perform an operation or processing, the processor may further include a necessary hardware accelerator, such as a field programmable gate array (field programmable gate array, FPGA), a PLD (programmable logic device), or a logic circuit for implementing a dedicated logic operation.

The memory in embodiments of this application may include at least one of the following types: a read-only memory (read-only memory, ROM) or another type of static storage device that can store static information and instructions, a random access memory (random access memory, RAM) or another type of dynamic storage device that can store information and instructions, or may also be an electrically erasable programmable read-only memory (Electrically erasable programmabler-only memory, EEPROM). In some scenarios, the memory may also be a compact disc read-only memory (compact disc read-only memory, CD-ROM), or another optical disc storage, optical disk storage (including a compact optical disc, a laser disc, an optical disc, a digital versatile disc, a blu-ray disc, and the like), a magnetic disk storage medium or another magnetic storage device, or any other medium that may be configured to carry or store desired program code in a form of instructions or data structures and that may be accessed by a computer. This application is not limited thereto.

The memory 112 may exist independently and is connected to the processor 111. Optionally, the memory 112 and the processor 111 may be integrated together, for example, integrated into one chip. The memory 112 can store program code for executing the technical solutions in embodiments of this application, and execution is controlled by the processor 111. Various types of executed computer program code may also be regarded as a driver of the processor 111. For example, the processor 111 is configured to execute the computer program code stored in the memory 112, thereby implementing the technical solutions in embodiments of this application.

The transceiver 113 may be configured to support receiving or sending of radio frequency signals between the network element and another device. The transceiver 113 may be connected to the antenna 115. The transceiver 113 includes a transmitter Tx and a receiver Rx. Specifically, the one or more antennas 115 may receive a radio frequency signal. The receiver Rx of the transceiver 113 is configured to receive the radio frequency signal from the antenna, convert the radio frequency signal into a digital baseband signal or a digital intermediate frequency signal, and provide the digital baseband signal or the digital intermediate frequency signal to the processor 111, so that the processor 111 further processes the digital baseband signal or the digital intermediate frequency signal, for example, performs demodulation processing and decoding processing. In addition, the transmitter Tx in the transceiver 113 is further configured to receive, from the processor 111, a modulated digital baseband signal or a modulated digital intermediate frequency signal, convert the modulated digital baseband signal or the modulated digital intermediate frequency signal into a radio frequency signal, and send the radio frequency signal through the one or more antennas 115. Specifically, the receiver Rx may selectively perform one-stage or multi-stage down-conversion processing and analog-to-digital conversion processing on the radio frequency signal to obtain a digital baseband signal or a digital intermediate frequency signal, and an order of the down-conversion processing and the analog-to-digital conversion processing is adjustable. The transmitter Tx may selectively perform one-stage or multi-stage up-conversion processing and digital-to-analog conversion processing on the modulated digital baseband signal or the modulated digital intermediate frequency signal to obtain a radio frequency signal, and an order of the up-conversion processing and the digital-to-analog conversion processing is adjustable. The digital baseband signal and the digital intermediate frequency signal may be collectively referred to as digital signals.

FIG. 4 is a composition example of a UE according to an embodiment of this application. The UE may be, for example, a mobile phone or an intelligent wearable device (for example, an intelligent watch). A mobile phone is used as an example below. The UE may include a processor 310, an external memory interface 320, an internal memory 321, a display screen 330, a camera 340, an antenna 1, an antenna 2, a mobile communication module 350, a wireless communication module 360, and the like.

It may be understood that the structure illustrated in this embodiment does not constitute a specific limitation on the UE. In some other embodiments, the UE may include more or fewer components than those shown in the figure, or some components may be combined, or some components may be split, or components are arranged in different manners. The components shown in the figure may be implemented by using hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

It may be understood that an interface connection relationship between the modules illustrated in this embodiment is merely an example for description, and does not constitute a limitation on the structure of the UE. In some other embodiments of this application, the UE may use an interface connection manner different from that in the foregoing embodiment or use a combination of a plurality of interface connection manners.

The external memory interface 320 may be configured to connect to an external memory card such as a micro SD card, to extend a storage capability of the UE. The external storage card communicates with the processor 310 by using the external memory interface 320, to implement a data storage function. For example, files such as music and videos are stored in the external storage card.

The internal memory 321 may be configured to store computer-executable program code. The executable program code includes instructions. The processor 310 runs the instructions stored in the internal memory 321, to perform various function applications and data processing of the UE. The internal memory 321 may include a program storage area and a data storage area. The program storage area may store an operating system, an application program required for at least one function (for example, a sound playing function or an image playing function), and the like. The data storage area may store data (for example, video stream data) and the like created during use of the UE. In addition, the internal memory 321 may include a high-speed random access memory, and may further include a non-volatile memory, for example, at least one magnetic disk storage device, a flash memory device, or a universal flash storage (universal flash storage, UFS). The processor 310 runs the instructions stored in the internal memory 321, and/or the instructions stored in the memory arranged in the processor, to perform various functions and data processing of the UE.

A wireless communication function of the UE may be implemented by using the antenna 1, the antenna 2, the mobile communication module 350, the wireless communication module 360, the modem processor, the baseband processor, and the like.

The antenna 1 and the antenna 2 are configured to transmit and receive an electromagnetic wave signal. Each antenna in the UE may be configured to cover one or more communication bands. Different antennas may further be multiplexed to improve antenna utilization. For example, the antenna 1 may be multiplexed as a diversity antenna of a wireless local area network. In some other embodiments, the antenna may be used in combination with a tuning switch.

The mobile communication module 350 may provide a solution to wireless communication such as 2G/3G/4G/5G applied to the UE. The mobile communication module 350 may include at least one filter, a switch, a power amplifier, a low noise amplifier (low noise amplifier, LNA), and the like. The mobile communication module 350 may receive an electromagnetic wave through the antenna 1, perform processing such as filtering and amplification on the received electromagnetic wave, and transmit the electromagnetic wave to the modem processor for demodulation. The mobile communication module 350 may further amplify a signal modulated by the modem processor, and convert the signal into an electromagnetic wave by using the antenna 1 for radiation. In some embodiments, at least some of functional modules of the mobile communication module 350 may be arranged in the processor 310. In some embodiments, at least some of the functional modules of the mobile communication module 350 may be arranged in a same component as at least some of modules of the processor 310.

In some embodiments, the UE initiates or receives a call request through the mobile communication module 350 and the antenna 1.

In addition, an operating system runs on the foregoing components, for example, an iOS operating system, an Android operating system, or a Windows operating system. An application program may be installed and run in the operating system. It may be clearly understood by a person skilled in the art that, for convenient and brief description, the explanation and the beneficial effects of related contents in any one of the UEs provided above can refer to the corresponding method embodiment provided above. Details are not described herein.

In addition, an embodiment of this application further provides a computer-readable storage medium. The computer-readable storage medium stores instructions that, when run on one or more computing devices, cause the one or more computing devices to perform the communication method according to the foregoing embodiments.

Further, an embodiment of this application further provides a computer program product. When the computer program product is executed by one or more computing devices, the one or more computing devices perform any one of the methods in the foregoing communication methods. The computer program product may be a software installation package. When any one of the foregoing communication methods needs to be used, the computer program product may be downloaded and executed on a computer.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that may be performed by a computer program may be easily implemented by using corresponding hardware. Further, a specific hardware structure used to achieve the same function may be of various forms, for example, an analog circuit, a digital circuit, or a dedicated circuit. However, as for this application, a software program implementation is a better implementation in most cases. Based on such an understanding, the technical solutions of this application, in essence or a part contributing to the conventional technology, may be implemented in a form of a software product. The computer software product is stored in a readable storage medium, such as a floppy disk, a USB flash drive, a removable hard disk, a ROM, a RAM, a magnetic disk, or an optical disc of a computer, and includes instructions for instructing a computer device (which may be a personal computer, a training device, a network device, or the like) to perform the methods according to embodiments of this application.

All or some of the foregoing embodiments may be implemented by using software, hardware, firmware, or any combination thereof. When the foregoing embodiments are implemented by using software, all or some of the foregoing embodiments may be implemented in a form of a computer program product.

The computer program product includes one or more computer instructions. When the computer program instructions are loaded and executed on a computer, all or some of the processes or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, another computer, another training device, or another data center in a wired manner (for example, through a coaxial cable, an optical fiber, or a digital subscriber line (DSL)) or a wireless manner (for example, an infrared manner, a radio manner, or a microwave manner). The computer-readable storage medium may be any usable medium that may be stored by a computer, or may be a data storage device, such as a training device or a data center in which one or more usable media are integrated. The usable medium may be a magnetic medium (such as a soft disk, a hard disk, or a magnetic tape), an optical medium (such as a DVD), a semiconductor medium (such as a solid state disk (solid state disk, SSD)), or the like.

The system architecture and the service scenario described in embodiments of this application are intended to describe the technical solutions in embodiments of this application more clearly, and do not constitute a limitation on the technical solutions provided in embodiments of this application. A person of ordinary skill in the art may learn that with evolution of the network architecture and emergence of a new service scenario, the technical solutions provided in embodiments of this application are also applicable to a similar technical problem.

## Claims

1. A communication method, wherein the method is applied to a user equipment UE, the UE establishes a radio resource control RRC connection with a first network element, the UE has not established an RRC connection with a second network element, and the method comprises:
receiving, by the UE, an RRC reconfiguration message from the first network element, wherein the RRC reconfiguration message is used for adding a carrier of the second network element to the UE;
receiving, by the UE, a first signal from the first network element, wherein the first signal is used by the UE to achieve downlink synchronization with the second network element based on frequency indication information of a carrier of the first network element and frequency indication information of a carrier of the second network element, the frequency indication information of the carrier of the first network element and the frequency indication information of the carrier of the second network element are obtained based on a message sent in advance by the first network element, the first signal is further used for measuring a channel state corresponding to the first signal, and the first signal comprises a synchronization signal/physical broadcast channel block SSB, a channel state information reference signal CSI-RS, or a tracking reference signal TRS;
receiving, by the UE, an activation message from the first network element, wherein the activation message is used for activating the carrier of the second network element added to the UE; and
sending, by the UE, a channel state report to the second network element, wherein the channel state report comprises a measurement result of the UE for the channel state corresponding to the first signal.

2. The method according to claim 1, wherein the RRC reconfiguration message is further used for configuring a first time-frequency resource associated with the second network element, and the first signal is transmitted to the UE through the first time-frequency resource.

3. The method according to claim 1, wherein the RRC reconfiguration message is further used for configuring a second time-frequency resource associated with a third network element, the second time-frequency resource is used for transmitting a second signal from the first network element to the UE when a carrier of the third network element is added to the UE, the second signal is used by the UE to achieve downlink synchronization with the third network element, and the second signal is further used for measuring a channel state corresponding to the second signal; and
the activation message comprises indication information of the first signal.

4. The method according to claim 1, wherein the carrier of the first network element configured for the UE and the carrier of the second network element are two carriers within a same band; or
the carrier of the first network element configured for the UE and the carrier of the second network element are two carriers within different bands.

5. The method according to any one of claims 1 to 4, wherein the method further comprises:
sending, by the UE, an RRC message to the first network element, wherein the RRC message indicates that the UE has a capability of achieving downlink synchronization with the second network element based on the first signal, or the RRC message indicates that the UE has a capability of generating the channel state report before receiving the activation message.

6. A communication method, wherein the method is applied to a first network element, the first network element establishes a radio resource control RRC connection with a user equipment UE, the UE has not established an RRC connection with a second network element, and the method comprises:
sending, by the first network element, a radio resource control RRC reconfiguration message to the UE, and sending a notification message to the second network element, wherein the RRC reconfiguration message is used for adding a carrier of the second network element to the UE, and the notification message is used for instructing the second network element to add the carrier to the UE;
sending, by the first network element, a first signal to the UE, wherein the first signal is used by the UE to achieve downlink synchronization with the second network element based on frequency indication information of a carrier of the first network element and frequency indication information of a carrier of the second network element, the frequency-related information of the carrier of the first network element and the frequency-related information of the carrier of the second network element are obtained based on a message sent in advance by the first network element, the first signal is further used for measuring a channel state corresponding to the first signal, and the first signal comprises a synchronization signal/physical broadcast channel block SSB, a channel state information reference signal CSI-RS, or a tracking reference signal TRS; and
sending, by the first network element, an activation message to the UE, wherein the activation message is used for activating the carrier of the second network element added to the UE.

7. The method according to claim 6, wherein the RRC reconfiguration message is further used for configuring a first time-frequency resource associated with the second network element; and
the sending, by the first network element, a first signal to the UE comprises:
sending, by the first network element, the first signal to the UE through the first time-frequency resource.

8. The method according to claim 6, wherein the RRC reconfiguration message is further used for configuring a second time-frequency resource associated with a third network element, the second time-frequency resource is used for transmitting a second signal from the first network element to the UE when a carrier of the third network element is added to the UE, the second signal is used by the UE to achieve downlink synchronization with the third network element, and the second signal is further used for measuring a channel state corresponding to the second signal; and
the activation message comprises indication information of the first signal.

9. The method according to claim 6, wherein the carrier of the first network element configured for the UE and the carrier of the second network element are two carriers within a same band; or
the carrier of the first network element configured for the UE and the carrier of the second network element are two carriers within different bands.

10. The method according to any one of claims 6 to 9, wherein the method further comprises:
receiving, by the first network element, an RRC message from the UE, wherein the RRC message indicates that the UE has a capability of achieving downlink synchronization with the second network element based on the first signal, or the RRC message indicates that the UE has a capability of generating a channel state report before receiving the activation message.

11. A communication method, wherein the method is applied to a second network element, the second network element has not established a radio resource control RRC connection with a user equipment UE, the UE establishes an RRC connection with a first network element, and the method comprises:
receiving, by the second network element, a notification message from the first network element, wherein the notification message is used for instructing the second network element to add a carrier of the second network element to the UE; and
receiving, by the second network element, a channel state report from the UE, wherein the channel state report comprises a measurement result of the UE for a channel state corresponding to a first signal, the first signal comes from the first network element, the first signal is used by the UE to achieve downlink synchronization with the second network element based on frequency indication information of a carrier of the first network element and frequency indication information of a carrier of the second network element, the frequency indication information of the carrier of the first network element and the frequency indication information of the carrier of the second network element are obtained based on a message sent in advance by the first network element, the first signal is further used for measuring the channel state corresponding to the first signal, and the first signal comprises a synchronization signal/physical broadcast channel block SSB, a channel state information reference signal CSI-RS, or a tracking reference signal TRS.

12. The method according to claim 11, wherein the carrier of the first network element configured for the UE and the carrier of the second network element are two carriers within a same band; or
the carrier of the first network element configured for the UE and the carrier of the second network element are two carriers within different bands.

13. A network element, comprising:
a transceiver, configured to perform a receiving operation and a sending operation in the method according to any one of claims 6 to 12; and
a processor, configured to perform another operation other than the receiving operation and the sending operation in the method according to any one of claims 6 to 12.

14. A user equipment UE, comprising:
a transceiver, configured to perform a receiving operation and a sending operation in the method according to any one of claims 1 to 5; and
a processor, configured to perform another operation other than the receiving operation and the sending operation in the method according to any one of claims 1 to 5.

15. A communication system, comprising a user equipment UE, a first network element, and a second network element, wherein the UE is configured to perform the method according to any one of claims 1 to 5, the first network element is configured to perform the method according to any one of claims 6 to 10, and the second network element is configured to perform the method according to claim 11 or 12.

16. A computer storage medium, configured to store a computer program, wherein the computer program, when executed, is used for implementing the communication method according to any one of claims 1 to 12.
